# FASCICULE DE BREVET EUROPEEN

(11) **EP 2 296 960 B1**
(45) Date de publication et mention de la délivrance du brevet: **25.01.2012**
(21) Numéro de dépôt: 09794012.6
(22) Date de dépôt: 14.05.2009
(51) Int. Cl.: B23K 11/11, B62D 65/02, B23K 37/02

(54) **SYSTEME POUR LA PRODUCTION D'AU MOINS TROIS TYPES DISTINCTS D'UNE CAISSE D'UN VEHICULE AUTOMOBILE ET PROCEDE POUR SA MISE EN OEUVRE**
SYSTEM ZUR HERSTELLUNG MINDESTENS DREIER ARTEN EINER MOTORFAHRZEUGKAROSSERIE UND VERFAHREN ZUR DURCHFÜHRUNG DIESER HERSTELLUNG
SYSTEM FOR PRODUCING AT LEAST THREE DIFFERENT TYPES OF BODY OF A MOTOR VEHICLE AND METHOD FOR CARRYING THIS OUT

(30) Priorité: 01.07.2008 FR 0854443
(43) Date de publication de la demande: 23.03.2011
(73) Titulaire: Renault S.A.S., 92100 Boulogne-Billancourt (FR)
(72) Inventeur: ROBIN, Jean-françois, F-78990 Elancourt (FR); LEJEUNE, Vincent, F-78320 Levis Saint Nom (FR)
(86) Numéro de dépôt international: PCT/FR2009/050895
(87) Numéro de publication internationale: WO 2010/004145

(56) Documents cités:
- EP-A- 0 513 453
- DE-A1-102005 013 636

## Description

L'invention concerne un système de production qui est apte à produire au moins trois types distincts d'une caisse, ou d'une partie d'une caisse, d'un véhicule automobile sur un même poste de production. Le document EP 0 513 453 décrit un système selon le préambule de la revendication 1.

L'invention concerne aussi un procédé pour la mise en oeuvre du système de production.

L'invention concerne plus particulièrement un système de production d'au moins un premier type et un deuxième type d'une caisse d'un véhicule automobile, système qui comporte :
- un poste de production comportant des moyens de production desdits deux types de caisses du véhicule ;
- un premier support pour la production du premier type de caisse, qui est monté mobile entre une position de production dans laquelle le premier support est apte à maintenir le premier type de caisse dans un rayon d'action desdits moyens de production, et une seconde position escamotée ;
- un deuxième support pour la production du deuxième type de caisse, qui est monté mobile entre une position de production dans laquelle le deuxième support est apte à maintenir le deuxième type de caisse dans un rayon d'action desdits moyens de production, et une seconde position escamotée ;
- un dispositif d'interversion du premier et du deuxième support, comportant une broche d'axe central dont une première portion porte le premier support et dont une seconde portion porte le deuxième support, lesdits supports étant opposés radialement de part et d'autre de l'axe central de la broche, et la broche étant montée pivotante autour de son axe central, par incrément d'un demi tour, entre une première position dans laquelle le premier support occupe sa position de production, le deuxième support occupant sa position escamotée, et une deuxième position dans laquelle le deuxième support occupe sa position de production, le premier support occupant sa position escamotée.

De façon générale, une ligne de production comporte au moins un poste de production, des moyens de production et un support de référence.

Le poste de production est par exemple un poste d'assemblage vers lequel est acheminée la caisse à produire et les moyens de production sont par exemple un outil de soudage manuel.

Le support permet le maintien de la caisse à produire dans une position d'assemblage, afin de permettre au moins une opération d'assemblage de cette caisse par les moyens de production.

Les contraintes industrielles exigent d'une telle ligne de production d'être capable de produire différents types de produits, par exemple jusqu'à quatre types différents de caisses ou de partie de caisse, dans un temps de cycle le plus court possible.

Chaque type différent, par exemple de côté de caisse, à produire présente des caractéristiques géométriques différentes, de sorte que chaque type est associé à un support de référence spécifique.

Ainsi, le support est remplacé à chaque fois qu'un type différent de côté de caisse est acheminé sur le poste de production en vue d'être assemblé.

Or, le remplacement du support, qui est un ensemble volumineux et lourd pouvant atteindre plusieurs tonnes, prend plusieurs secondes qui augmentent la durée du temps de cycle de production.

Pour répondre aux contraintes précédemment citées, il est connu de grouper les côtés de caisse à produire par type, de sorte qu'une pluralité de côtés de caisse du même type sont acheminés à la suite vers le poste de production, de façon à limiter la fréquence de remplacement des supports.

Les côtés de caisse ainsi produits sont ensuite stockés et emballés, ce qui occupe une surface importante, à cause de quoi une telle technique n'est pas adaptée à la production d'un objet volumineux, telle une caisse d'un véhicule automobile.

De plus, cette technique n'est pas adaptée aux objets qui doivent rester dans le flux de production de l'usine.

On connaît aussi une ligne de production qui est équipée d'un dispositif d'interversion, ou d'échange, d'un premier support et d'un second support différent du premier.

Le dispositif d'interversion comporte une broche d'axe central dont une première portion porte le premier support et dont une seconde portion opposée porte le second support.

La broche est montée pivotante par incrément d'un demi tour autour de son axe, entre une première position dans laquelle le premier support occupe une position de production dans le rayon d'action de l'opérateur, le deuxième support occupant alors une position escamotée, par exemple dans une fosse, et une deuxième position dans laquelle le deuxième support occupe une position de production, le premier support occupant alors une position escamotée.

Un tel dispositif d'interversion permet à un même poste de production d'être équipé de deux supports différents qui sont rapidement interchangeables, afin de produire deux types différents de côté de caisse.

Toutefois, un tel dispositif est limité à la production de deux types différents de côté de caisse.

En effet, la masse et l'encombrement de chaque support ne permet pas à la broche du dispositif de porter plus de deux supports.

L'invention a pour but de proposer un système de production qui comporte un poste de travail apte à produire au moins trois types différents de côté de caisse du véhicule automobile, au moyen de trois supports différents, en répondant aux contraintes industrielles précitées.

Dans ce but, l'invention propose un système de production du type décrit précédemment, caractérisé en ce que la première portion et la seconde portion de la broche comportent chacune des moyens de verrouillage du support associé de sorte que chaque support est monté de façon amovible sur la broche, et en ce que le système de production comporte un dispositif de remplacement de support, qui est apte à remplacer le support occupant une position escamotée par au moins un troisième support supplémentaire d'un troisième type de caisse.

Selon d'autres caractéristiques de l'invention :
- le dispositif de remplacement de support comporte :
   -- un magasin qui est agencé au dessous du poste de production et qui comporte une zone de remplacement de support dans laquelle est agencé le support qui occupe une position escamotée,
   -- un chariot qui comporte au moins un premier emplacement libre et un deuxième emplacement dans lequel est agencé le troisième support, le chariot étant monté mobile dans le magasin entre une position de déchargement dans laquelle le premier emplacement libre du chariot est agencé dans la zone de remplacement du magasin de sorte que le support qui occupe une position escamotée est apte à être déverrouillé de la broche pour occuper le premier emplacement libre du chariot, et une position de chargement dans laquelle le deuxième emplacement du chariot est agencé dans la zone de remplacement du magasin de sorte que le troisième support est apte à être verrouillé sur la broche ;
- le chariot comporte au moins un troisième emplacement dans lequel est agencé un quatrième support supplémentaire d'un quatrième type de caisse ;
- le poste de production comporte un plancher qui est monté mobile entre une position horizontale dans laquelle un opérateur est apte à occuper une position de production sur le plancher, et une position verticale de sécurité dans laquelle le plancher interdit l'accès au poste de travail, notamment au cours du remplacement d'un desdits supports ;
- chacun desdits types de caisse à produire comporte une pluralité de pièces à assembler entre elles, et en ce que chaque support comporte des moyens de fixation et/ou de mise en position desdites pièces à assembler ;
- les moyens de production comportent au moins un outil de soudage manuel pour l'assemblage desdites pièces par l'opérateur.

L'invention propose aussi un procédé pour la mise en oeuvre du système de production d'au moins trois types différents de caisse d'un véhicule automobile, les différents types de caisse étant acheminés au poste de production selon un ordre programmé, caractérisé en ce que le procédé comporte une pluralité d'étapes successives parmi lesquelles :
- une étape de déchargement de support comportant :
   -- une phase d'entraînement du chariot dans sa position de déchargement dans laquelle le premier emplacement libre du chariot est agencé dans la zone de remplacement du magasin ;
   -- une phase de déverrouillage du support qui occupe une position escamotée et qui est verrouillé sur la broche, de sorte que ledit support est déchargé de la broche et il est porté par le chariot, par le premier emplacement libre ;
- une étape de chargement du support sélectionné en fonction du prochain type de caisse à produire selon l'ordre programmé, l'étape de chargement comportant :
   -- une phase d'entraînement du chariot dans sa position de chargement dans laquelle le deuxième ou troisième emplacement du chariot est agencé dans la zone de remplacement du magasin ;
   -- une phase de verrouillage sur la broche du support sélectionné de façon à charger sur la broche ledit support ;
- une étape d'interversion des deux supports qui sont portés par la broche.

Selon d'autres caractéristiques du procédé :
- l'étape d'interversion comporte :
   -- une phase préliminaire d'entraînement du plancher depuis sa position horizontale jusqu'à sa position verticale de sécurité ;
   -- une phase d'entraînement en pivotement d'un demi tour de la broche du dispositif d'interversion de manière à entraîner ledit support sélectionné depuis sa position escamotée jusqu'à sa position de production ;
   -- une phase d'entraînement du plancher depuis sa position verticale de sécurité jusqu'à sa position horizontale ;
- l'étape de chargement et l'étape de déchargement sont réalisables en temps masqué, pendant la production desdits types de caisses.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique qui illustre un système de production comportant un poste de production et un dispositif d'interversion de deux supports dont un chariot de support occupe une position de déchargement ;
- la figure 2 est une vue schématique similaire à celle de la figure 1, qui illustre le chariot de la figure 1 dans une position de chargement ;
- la figure 3 est une vue schématique qui illustre le plancher du poste de production de la figure 1 dans une position verticale de sécurité ;
- la figure 4 est une vue de détail en perspective qui illustre des moyens de verrouillage des deux supports de la figure 1 sur le chariot ;
- la figure 5 est une vue de détail en coupe transversale, qui illustre une pince des moyens de verrouillage de la figure 4.

Les éléments identiques, similaires ou analogues de l'invention seront désignés par les mêmes chiffres de référence.

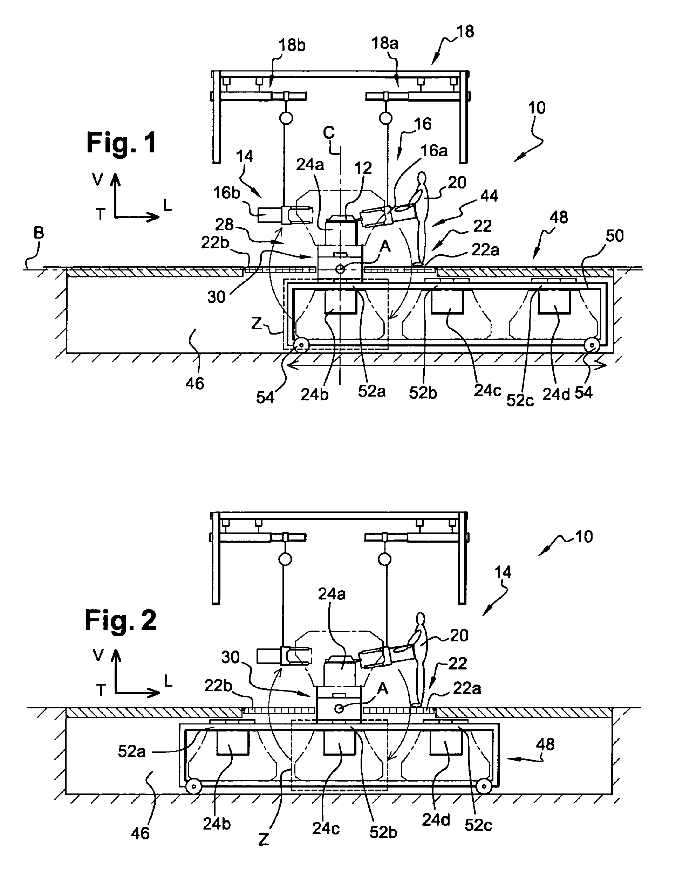

On utilisera à titre non limitatif les termes avant et arrière en référence à la partie gauche et à la partie droite respectivement de la figure 1, et les orientations longitudinale, verticale et transversale selon le trièdre L, V, T représenté aux figures.

On a représenté à la figure 1 un système de production 10 qui équipe une ligne de production (non représentée).

La ligne de production est apte à produire une pluralité de types d'une partie d'une caisse d'un véhicule automobile, cette partie de caisse étant par exemple un côté de caisse 12 du véhicule.

Le système de production 10 est ici un système d'assemblage par soudage manuel des pièces qui constituent chaque type de côté de caisse 12.

Le système de production 10 permet ici de produire quatre types différents de côté de caisse 12.

A cet effet, le système de production 10 comporte un poste de production 14 vers lequel les types de côté de caisse à assembler sont acheminés selon un ordre programmé en vue d'être assemblés, ou produits.

L'ordre d'acheminement des différents types de côté de caisse 12 est par exemple géré par des moyens informatisés de gestion du flux (non représentés) de la ligne de production.

Le poste de production 14 est équipé de moyens de production 16 qui comportent ici un premier outil de soudage 16a suspendu à un palan 18a mobile, de sorte qu'un opérateur 20 est apte à utiliser l'outil 16a de soudage pour assembler les pièces présentent sur le poste de production 14 pour produire, ou assembler, un des quatre types de côté de caisse 12.

Avantageusement, les moyens de production 16 comportent un second outil de soudage 16b qui est suspendu à un palan 18b mobile, de sorte que l'opérateur 20, ou un second opérateur (non représenté), est apte à utiliser l'outil 16b de soudage pour assembler les pièces présentes sur le poste de production 14.

Le premier et le second outil de soudage 16a, 16b sont agencés de part et d'autre du côté de caisse 12 à produire, de sorte que le premier opérateur 20 et le second opérateur peuvent travailler conjointement et simultanément en vis à vis sur le même côté de caisse 12 à assembler.

Le poste de production 14 comporte un plancher 22 constitué d'une première plaque 22a et d'une seconde plaque 22b qui sont agencées de part et d'autre du côté de caisse 12 à produire.

Chaque plaque 22a, 22b du plancher 22 est montée mobile entre une position horizontale dans laquelle l'opérateur 20 est apte à occuper une position de production sur le plancher 22, et une position verticale de sécurité, qui sera décrite ultérieurement.

Le système de production 10 comporte un premier support 24a pour la production d'un premier type de côté de caisse 12.

Le premier support 24a comporte une plaque horizontale de référence, telle qu'un marbre (non représenté), sur lequel sont fixés des moyens de maintien en position (non représentés) et des moyens de mise en position (non représentés) des pièces qui constituent le premier type de côté de caisse 12 à assembler.

Le trait discontinu qui entoure le premier support 24a aux figures 1 à 3 représente schématiquement le volume que peut représenter le support 24a.

Le premier support 24a est représenté à la figure 1 dans une position de production, dans laquelle les pièces du premier type de côté de caisse 12 sont aptes à être fixées et mises en position par rapport au marbre de référence du support 24a, de sorte que l'opérateur 20 est apte à les souder avec l'outil de soudage 16a.

De façon complémentaire, le système 10 comporte un deuxième support 24b pour la production d'un second type de côté de caisse (non représenté).

De même, le deuxième support 24b comporte un marbre de référence, sur lequel sont fixés des moyens de maintien en position (non représentés) et de mise en position (non représentés) d'une pluralité de pièces qui constituent le deuxième type de côté de caisse à assembler.

Le deuxième support 24b est représenté à la figure 1 dans une position escamotée, dans laquelle le deuxième support 24b est agencé au dessous du plancher 22.

Le système 10 comporte un dispositif d'interversion 28, qui permet d'intervertir la position du premier support 24a avec celle du deuxième support 24b, de sorte que le deuxième support 24b occupe une position de production et que le premier support 24a occupe alors une position escamotée.

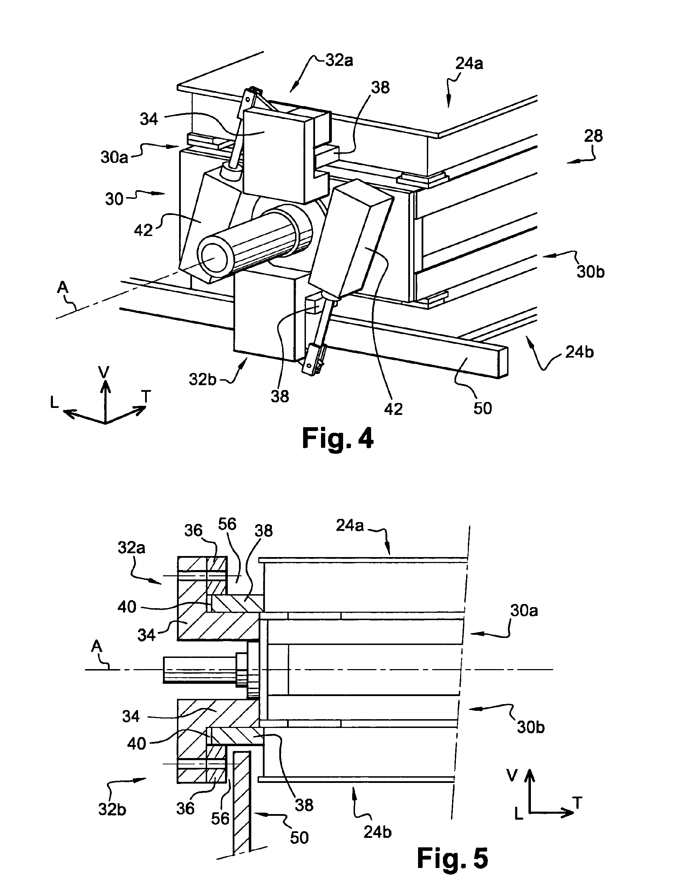

A cet effet, le dispositif d'interversion 28 comporte une broche 30 qui est ici constituée par une structure métallique parallélépipédique transversale et qui présente un axe central A, comme l'illustre la figure 4.

L'axe central A est un premier axe de symétrie de la broche 30 du dispositif d'inversion 28.

De même, la broche 30 présente un second axe B de symétrie, qui est longitudinal et orthogonal à l'axe A, et un troisième axe C de symétrie qui est vertical et orthogonal à l'axe A, comme le montre la figure 1.

La broche 30 illustrée à la figure 4 comporte une première portion 30a supérieure qui s'étend axialement selon l'axe A et qui porte le premier support 24a.

Par symétrie selon l'axe A, la broche 30 comporte une seconde portion 30b inférieure qui s'étend axialement et qui porte le deuxième support 24b.

La première portion 30a comporte des premiers moyens 32a de verrouillage du support associé et la seconde portion 30b comporte des seconds moyens 32b de verrouillage du support associé, qui sont représentés en détail aux figures 4 et 5.

De façon complémentaire, chaque support 24a, 24b comporte deux poignées 38 de verrouillage qui sont fixées à une première extrémité axiale et à une seconde extrémité axiale respectivement du support 24a.

Les premiers moyens de verrouillage 32a comportent deux mors fixes 34 qui sont fixés sur une première extrémité axiale et sur une seconde extrémité axiale de la première portion 30a de la broche 30 respectivement, de façon symétrique selon le second axe B de symétrie.

Chaque mors fixe 34 porte un mors mobile 36 qui est monté pivotant entre une position de repos dans laquelle le mors fixe 34 et le mors mobile 36 délimitent entre eux un premier logement dans lequel la poignée 38 du support 24a associé est apte à coulisser, et une position de verrouillage dans laquelle le mors fixe 34 et le mors mobile 36 délimitent entre eux un second logement 40, plus étroit, dans lequel la poignée 38 du support 24a associé est apte à être verrouillée mécaniquement par pincement, comme l'illustre la figure 5.

Enfin, chaque mors mobile 36 est entraîné en pivotement par un actionneur, ici un vérin 42 qui est représenté à la figure 4 et qui est porté par la broche 30, grâce à quoi les premiers moyens de verrouillage 32a sont aptes à verrouiller fixement le support 24a associé sur la première portion 30a de la broche 30.

Par symétrie selon l'axe A, les seconds moyens de verrouillage 32b sont identiques aux premiers moyens de verrouillage 32a et sont aptes à verrouiller fixement le support 24b associé sur la seconde portion 30b de la broche 30.

La broche 30 est montée pivotante autour de son axe central A, par incrément d'un demi tour, entre une première position dans laquelle le premier support 24a occupe sa position de production, le deuxième support 24b occupant alors sa position escamotée, et une deuxième position dans laquelle le deuxième support 24b occupe sa position de production, le premier support 24a occupant alors sa position escamotée.

La broche 30 est ici entraînée en pivotement au moyen d'un moteur électrique.

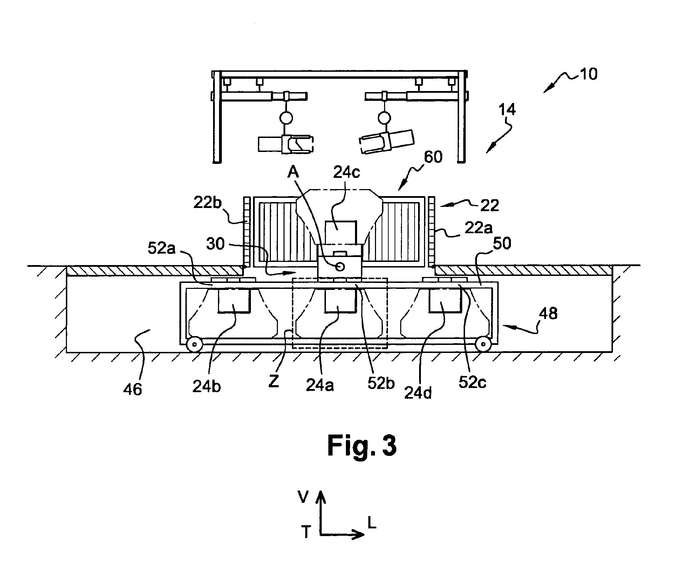

Avant le pivotement de la broche 30 et après le retrait de l'opérateur 20 du poste de production 14, chaque plaque 22a, 22b du plancher 22 est entraînée depuis sa position horizontale jusqu'à sa position verticale de sécurité, illustrée à la figure 3, afin d'interdire l'accès au poste de production 14.

Dans cette position verticale de sécurité, les plaques 22a, 22b libèrent un espace pour permettre le passage des deux supports 24a, 24b au cours du pivotement de la broche 30.

Pour compléter l'interdiction de l'accès au poste de production 14, une première barrière 60 et une seconde barrière (non représentée) sont entraînées depuis une position escamotée (non représentée), jusqu'à une position de sécurité dans laquelle les barrières sont agencées à une première extrémité axiale et à une seconde extrémité axiale du poste de production 14 respectivement.

Selon un autre aspect, le système de production 10 comporte un dispositif 44 de remplacement de support, qui est apte à remplacer le support occupant une position escamotée par au moins un troisième support 24c supplémentaire d'un troisième type de côté de caisse (non représenté).

Le dispositif 44 de remplacement de support comporte un magasin 46, du type fosse, qui est agencé au dessous du poste de production 14, en partie au dessous du plancher 22.

Le magasin 46 comporte une zone Z de remplacement de support qui est agencée sous la broche 30 de sorte que le support 24b qui occupe sa position escamotée est situé dans cette zone Z.

Le dispositif 44 de remplacement comporte un chariot 48 qui est constitué d'une structure métallique de forme parallélépipédique comportant notamment deux montants supérieurs 50 longitudinaux.

Le chariot 48 comporte trois emplacements 52, dont chacun est apte à recevoir un des supports 24a, 24b, 24c en vue de le stocker et de le transporter.

Comme on peut le voir à la figure 1, parmi les trois emplacements 52 du chariot 48, un premier emplacement avant 52a est libre et il est agencé dans la zone Z de remplacement du magasin 46.

Un deuxième emplacement intermédiaire 52b porte le troisième support 24c.

Un troisième emplacement arrière 52c porte un quatrième support 24d.

De façon générale, le chariot 48 comporte un emplacement libre et deux autres emplacements occupés par un des quatre supports 24.

On entend ici par emplacement libre un emplacement qui ne porte pas de support.

Le chariot 48 comporte quatre roues 54 coopérant deux à deux avec une paire de rails (non représentés) longitudinaux, de sorte que le chariot 48 est apte à être déplacé longitudinalement d'avant en arrière dans le magasin 46.

Plus précisément, le chariot 48 est monté mobile dans le magasin 46 entre une position de déchargement, représentée à la figure 1, dans laquelle l'emplacement libre 52a du chariot 48 est agencé dans la zone Z de remplacement du magasin 46, et une position de chargement, représentée à la figure 2, dans laquelle l'emplacement 52b occupé par le troisième support 24c est agencé dans la zone Z de remplacement du magasin 46.

Ainsi, lorsque le chariot 48 occupe sa position de déchargement, le support qui occupe une position escamotée, le support 24b à la figure 1, est apte à être déverrouillé de la broche 30 pour occuper l'emplacement libre du chariot 38, ici l'emplacement 52a, et pour être porté par le chariot 48.

Aussi, lorsque le chariot 48 occupe sa position de chargement, un des deux autres supports portés par le chariot 48, ici les supports 24c, 24d, est apte à être verrouillé sur la broche 30.

Comme on peut le voir à la figure 5, les premiers moyens de verrouillage 32a et les seconds moyens de verrouillage 32b sont agencés de façon à délimiter une fente 56 longitudinale entre l'extrémité axiale de la portion 30a, 30b associée et l'ensemble constitué par le mors fixe 34 et le mors mobile 36 associés.

La fente 56 est ouverte verticalement vers le bas lorsque la portion 30a, 30b associée de la broche 30 porte un support 24 qui occupe une position escamotée, de façon à permettre le passage des montants supérieurs 50 du chariot 48 entre les deux fentes 56 lors du déplacement du chariot 48.

De plus, au cours du pivotement du mors mobile 36 vers sa position de verrouillage, le mors mobile 36 entraîne sensiblement le support 24 associé verticalement vers le haut afin de le plaquer contre le mors fixe 40, de sorte que le support 24 ne repose plus sur les montants 50 supérieurs du chariot 48, comme l'illustre la figure 5.

L'invention concerne aussi un procédé pour la mise en oeuvre du système de production 10 précédemment décrit.

Le procédé comporte une pluralité d'étapes successives dont une première étape de déchargement de support de la broche 30, une deuxième étape de chargement de support sélectionné sur la broche 30 et une troisième étape d'interversion des deux supports qui sont portés par la broche 30.

Le choix du support à charger sur la broche 30, dit support sélectionné, lors de la seconde étape du procédé, est effectué par les moyens informatisés de gestion qui transmettent une consigne de production au système de production 10, la consigne déterminant le support sélectionné.

Dans l'exemple décrit, le support sélectionné est le troisième support 24c.

La première étape de déchargement de support, représentée à la figure 1, comporte une première phase d'entraînement du chariot 48 dans sa position de déchargement dans laquelle l'emplacement libre du chariot 48, ici le premier emplacement avant 52a, est agencé dans la zone Z de remplacement du magasin 46.

Une seconde phase de la première étape, représentée aussi à la figure 1, consiste à déverrouiller le support qui occupe une position escamotée et qui est verrouillé sur la broche 30, ici le support 24b, de sorte que le support 24b est déchargé de la broche 30 et qu'il est porté par le chariot 30, dans le premier emplacement 52a.

La seconde étape de chargement, représentée à la figure 2, comporte une première phase d'entraînement du chariot 48 dans sa position de chargement dans laquelle le deuxième emplacement 52b intermédiaire du chariot 48 qui porte le support 24c sélectionné est agencé dans la zone Z de remplacement du magasin 46.

Une seconde phase de la deuxième étape consiste à verrouiller sur la broche 30 le support 24c sélectionné de façon à le charger sur la broche 30.

Enfin, la troisième étape d'interversion comporte une première phase préliminaire qui consiste à entraîner le plancher 22 depuis sa position horizontale jusqu'à sa position verticale de sécurité.

De même, la première barrière 60 et la seconde barrière sont entraînées depuis leur position escamotée, jusqu'à leur position de sécurité.

Une seconde phase de la troisième étape d'interversion consiste à intervertir le support 24c sélectionné qui occupe une position escamotée, avec le support 24a qui occupe une position de production.

A cet effet, la broche est entraînée en pivotement d'un demi tour autour de son axe A, comme l'illustre la figure 3.

Enfin, une troisième phase de la troisième étape consiste à entraîner le plancher 22 depuis sa position verticale de sécurité jusqu'à sa position horizontale initiale.

De même, la première barrière 60 et la seconde barrière sont entraînées depuis leur position de sécurité, jusqu'à leur position escamotée.

A ce stade du procédé, il apparaît que le nouvel emplacement vide du chariot 38 est l'emplacement 52b, lequel est agencé dans la zone Z de remplacement du magasin 46.

Par conséquent, la première phase d'entraînement du chariot 48 dans sa position de déchargement de la première étape de déchargement est déjà remplie pour le cycle suivant.

Grâce à l'invention, un même poste de production est équipé de plus de deux supports de production, grâce à quoi le système de production 10 est apte à produire autant de types de côté de caisse 12 différents qu'il y a de supports associés.

De plus, le temps de remplacement d'un support par un autre est limité au temps nécessaire pour réaliser la troisième étape d'interversion, car la première étape de chargement et la première étape de déchargement sont réalisables en temps masqué, pendant la production du côté de caisse.

## Revendications

1. Système de production (10) d'au moins un premier type et un deuxième type d'une caisse (12) d'un véhicule automobile, système qui comporte :
- un poste de production (14) comportant des moyens de production (16) desdits deux types de caisses du véhicule ;
- un premier support (24a) pour la production du premier type de caisse, qui est monté mobile entre une position de production dans laquelle le premier support (24a) est apte à maintenir le premier type de caisse dans un rayon d'action desdits moyens de production (16), et une seconde position escamotée ;
- un deuxième support (24b) pour la production du deuxième type de caisse, qui est monté mobile entre une position de production dans laquelle le deuxième support (24b) est apte à maintenir le deuxième type de caisse dans un rayon d'action desdits moyens de production (16), et une seconde position escamotée ;
- un dispositif d'interversion (28) du premier (24a) et du deuxième support (24b), comportant une broche (30) d'axe central (A) dont une première portion (30a) porte le premier support (24a) et dont une seconde portion (30b) porte le deuxième support (24b), lesdits supports (24a, 24b) étant opposés radialement de part et d'autre de l'axe central (A) de la broche (30), et la broche (30) étant montée pivotante autour de son axe central (A), par incrément d'un demi tour, entre une première position dans laquelle le premier support (24a) occupe sa position de production, le deuxième support (24b) occupant sa position escamotée, et une deuxième position dans laquelle le deuxième support (24b) occupe sa position de production, le premier support (24a) occupant sa position escamotée,
**caractérisé en ce que** la première portion (30a) et la seconde portion (30b) de la broche (30) comportent chacune des moyens de verrouillage (32a, 32b) du support associé de sorte que chaque support (24a, 24b) est monté de façon amovible sur la broche (30), et **en ce que** le système de production (10) comporte un dispositif (44) de remplacement de support, qui est apte à remplacer le support (24b) occupant une position escamotée par au moins un troisième support (24c) supplémentaire d'un troisième type de caisse (12).

2. Système (10) selon la revendication 1, **caractérisé en ce que** le dispositif (44) de remplacement de support comporte :
- un magasin (46) qui est agencé au dessous du poste de production (14) et qui comporte une zone (Z) de remplacement de support dans laquelle est agencé le support (24a, 24b, 24c) qui occupe une position escamotée,
- un chariot (48) qui comporte au moins un premier emplacement (52a) libre et un deuxième emplacement (52b) dans lequel est agencé le troisième support (24c), le chariot (48) étant monté mobile dans le magasin (46) entre une position de déchargement dans laquelle le premier emplacement (52a) libre du chariot (48) est agencé dans la zone (Z) de remplacement du magasin (46) de sorte que le support (24b) qui occupe une position escamotée est apte à être déverrouillé de la broche (30) pour occuper le premier emplacement (51a) libre du chariot (48), et une position de chargement dans laquelle le deuxième emplacement (52b) du chariot (48) est agencé dans la zone (Z) de remplacement du magasin (46) de sorte que le troisième support (24c) est apte à être verrouillé sur la broche (30).

3. Système (10) selon la revendication 2, **caractérisé en ce que** le chariot (48) comporte au moins un troisième emplacement (52c) dans lequel est agencé un quatrième support (24d) supplémentaire d'un quatrième type de caisse (12).

4. Système (10) selon l'une quelconque des revendications précédentes, **caractérisé en ce que** le poste de production (14) comporte un plancher (22) qui est monté mobile entre une position horizontale dans laquelle un opérateur (20) est apte à occuper une position de production sur le plancher (22), et une position verticale de sécurité dans laquelle le plancher (22) interdit l'accès au poste de travail (14), notamment au cours du remplacement d'un desdits supports (24a, 24b, 24c, 24d).

5. Système (10) selon l'une quelconque des revendications précédentes, **caractérisé en ce que** chacun desdits types de caisse à produire comporte une pluralité de pièces à assembler entre elles, et **en ce que** chaque support (24a, 24b, 24c, 24d) comporte des moyens de fixation et/ou de mise en position desdites pièces à assembler.

6. Système (10) selon l'une quelconque des revendications précédentes, **caractérisé en ce que** les moyens de production (16) comportent au moins un outil de soudage (16a) manuel pour l'assemblage desdites pièces par l'opérateur (20).

7. Procédé pour la mise en oeuvre du système de production (10) d'au moins trois types différents de caisse d'un véhicule automobile, selon l'une quelconque des revendications précédentes, les différents types de caisse étant acheminés au poste de production (14) selon un ordre programmé, **caractérisé en ce que** le procédé comporte une pluralité d'étapes successives parmi lesquelles :
- une étape de déchargement de support comportant :
-- une phase d'entraînement du chariot (48) dans sa position de déchargement dans laquelle le premier emplacement (52a) libre du chariot (48) est agencé dans la zone (Z) de remplacement du magasin (46) ;
-- une phase de déverrouillage du support (24b) qui occupe une position escamotée et qui est verrouillé sur la broche (30), de sorte que ledit support (24b) est déchargé de la broche (30) et il est porté par le chariot (48), par le premier emplacement (52a) libre ;
- une étape de chargement du support sélectionné (24c) en fonction du prochain type de caisse à produire selon l'ordre programmé, l'étape de chargement comportant :
-- une phase d'entraînement du chariot (48) dans sa position de chargement dans laquelle le deuxième (52b) ou troisième (52c) emplacement du chariot (48) est agencé dans la zone (Z) de remplacement du magasin (46) ;
-- une phase de verrouillage sur la broche (30) du support sélectionné (24c) de façon à charger sur la broche (30) ledit support (24c) ;
- une étape d'interversion des deux supports (24a, 24b) qui sont portés par la broche (30).

8. Procédé selon la revendication 7, **caractérisé en ce que** l'étape d'interversion comporte :
-- une phase préliminaire d'entraînement du plancher (20) depuis sa position horizontale jusqu'à sa position verticale de sécurité ;
-- une phase d'entraînement en pivotement d'un demi tour de la broche (30) du dispositif d'interversion de manière à entraîner ledit support (24c) sélectionné depuis sa position escamotée jusqu'à sa position de production ;
-- une phase d'entraînement du plancher (22) depuis sa position verticale de sécurité jusqu'à sa position horizontale.

9. Procédé selon l'une quelconque des revendications 7 et 8, **caractérisé en ce que** l'étape de chargement et l'étape de déchargement sont réalisables en temps masqué, pendant la production desdits types de caisses.

## Claims

1. System (10) for producing at least a first type and a second type of body (12) of a motor vehicle, which system comprises:
- a production station (14) comprising means (16) for producing said two types of vehicle body;
- a first support (24a) for producing the first type of body, which is mounted so that it can move between a production position in which the first support (24a) is able to hold the first type of body within a radius of action of said production means (16), and a second retracted position;
- a second support (24b) for producing the second type of body, which is mounted so that it can move between a production position in which the second support (24b) is able to hold the second type of body within a radius of action of said production means (16), and a second retracted position;
- a switching device (28) for switching the first (24a) and second (24b) supports, comprising a spindle (30) with a central axis (A), a first portion (30a) of which carries the first support (24a) and a second portion (30b) of which carries the second support (24b), said supports (24a, 24b) being radially opposed on either side of the central axis (A) of the spindle (30), and the spindle (30) being mounted so as to pivot about its central axis (A) by an increment of half a revolution between a first position in which the first support (24a) occupies its production position, the second support (24b) occupying its retracted position, and a second position in which the second support (24b) occupies its production position, the first support (24a) occupying its retracted position,
**characterized in that** the first portion (30a) and the second portion (30b) of the spindle (30) each comprise means (32a, 32b) for locking the associated support such that each support (24a, 24b) is mounted removably on the spindle (30), and **in that** the production system (30) comprises a support replacement device (44) which is able to replace the support (24b) occupying a retracted position with at least a third additional support (24c) for a third type of body (12).

2. System (10) according to Claim 1, **characterized in that** the support replacement device (44) comprises:
- a store (46) which is arranged beneath the production station (14) and which comprises a support replacement zone (Z) in which is arranged the support (24a, 24b, 24c) which occupies a retracted position,
- a carriage (48) which comprises at least a first free location (52a) and a second location (52b) in which the third support (24c) is arranged, the carriage (48) being mounted so that it can move in the store (46) between an unloading position in which the first free location (52a) of the carriage (48) is arranged in the replacement zone (Z) of the store (46) so that the support (24b) which occupies a retracted position is able to be unlocked from the spindle (30) in order to occupy the first free location (51a) of the carriage (48), and a loading position in which the second location (52b) of the carriage (48) is arranged in the replacement zone (Z) of the store (46) so that the third support (24c) is able to be locked onto the spindle (30).

3. System (10) according to Claim 2, **characterized in that** the carriage (48) comprises at least a third location (52c) in which a fourth additional support (24d) for a fourth type of body (12) is arranged.

4. System (10) according to any of the preceding claims, **characterized in that** the production station (14) comprises a floor (22) which is mounted so that it can move between a horizontal position in which an operator (20) is able to occupy a production position on the floor (22), and a vertical safety position in which the floor (22) prevents access to the work station (14), in particular during the replacement of one of said supports (24a, 24b, 24c, 24d).

5. System (10) according to any of the preceding claims, **characterized in that** each of said types of body to be produced comprises a plurality of pieces to be assembled together, and **in that** each support (24a, 24b, 24c, 24d) comprises means for fixing and/or positioning said pieces to be assembled.

6. System (10) according to any of the preceding claims, **characterized in that** the production means (16) comprise at least one manual welding tool (16a) for the assembly of said pieces by the operator (20).

7. Method for carrying out the system (10) for producing at least three different types of body for a motor vehicle, according to any one of the preceding claims, the different body types being conveyed to the production station (14) in a programmed order, **characterized in that** the method comprises a plurality of successive steps, including:
- an unloading step in which the support is unloaded, comprising:
-- a driving phase in which the carriage (48) is driven into its unloading position in which the first free location (52a) of the carriage (48) is arranged in the replacement zone (Z) of the store (46);
-- an unlocking phase in which the support (24b) which occupies a retracted position and which is locked onto the spindle (30) is unlocked so that said support (24b) is unloaded from the spindle (30) and is carried by the carriage (48), in the first free location (52a);
- a loading step in which the support selected (24c) depending on the next type of body to be produced according to the programmed order is loaded, the loading step comprising:
-- a driving phase in which the carriage (48) is driven into its loading position in which the second (52b) or third (52c) location of the carriage (48) is arranged in the replacement zone (Z) of the store (46);
-- a locking phase in which the selected support (24c) is locked onto the spindle (30) so as to load said support (24c) onto the spindle (30);
- a switching step in which the two supports (24a, 24b) which are carried by the spindle (30) are switched.

8. Method according to Claim 7, **characterized in that** the switching step comprises:
-- a preliminary driving phase in which the floor (22) is driven from its horizontal position into its vertical safety position;
-- a driving phase in which the spindle (30) of the stitching device is driven in a pivoting movement by half a revolution so as to drive said selected support (24c) from its retracted position into its production position;
-- a driving phase in which the floor (22) is driven from its vertical safety position into its horizontal position.

9. Method according to either of Claims 7 and 8, **characterized in that** the loading step and the unloading step can be performed as a background task during the production of said body types.

## Patentansprüche

1. System (10) zur Produktion mindestens einer ersten und einer zweiten Art einer Karosserie (12) eines Kraftfahrzeugs, wobei das System Folgendes umfasst:
- eine Produktionsstation (14), die Mittel (16) zur Herstellung der beiden Fahrzeugkarosseriearten umfasst;
- einen ersten Träger (24a) für die Herstellung der ersten Karosserieart, der zwischen einer Herstellungsposition, in der der erste Träger (24a) die erste Karosserieart in einem Aktionsradius der Herstellungsmittel (16) halten kann, und einer zweiten, zurückgezogenen Position beweglich angebracht ist;
- einen zweiten Träger (24b) für die Herstellung der zweiten Karosserieart, der zwischen einer Herstellungsposition, in der der zweite Träger (24b) die zweite Karosserieart in einem Aktionsradius der Herstellungsmittel (16) halten kann, und einer zweiten, zurückgezogenen Position beweglich angebracht ist;
- eine Vorrichtung (28) zum Umschalten des ersten (24a) und des zweiten Trägers (24b), die eine Spindel (30) mit einer mittleren Achse (A) umfasst, von der ein erster Teil (30a) den ersten Träger (24a) trägt und von der ein zweiter Teil (30b) den zweiten Träger (24b) trägt, wobei sich die Träger (24a, 24b) radial auf beiden Seiten der mittleren Achse (A) der Spindel (30) gegenüberliegen und die Spindel (30) inkremental um eine halbe Umdrehung um ihre mittlere Achse (A) zwischen einer ersten Position, in der der erste Träger (24a) seine Herstellungsposition einnimmt, wobei der zweite Träger (24b) seine zurückgezogene Position einnimmt, und eine zweite Position, in der der zweite Träger (24b) seine Herstellungsposition einnimmt, wobei der erste Träger (24a) seine zurückgezogene Position einnimmt, schwenkbar angebracht ist,
**dadurch gekennzeichnet, dass** der erste Teil (30a) und der zweite Teil (30b) der Spindel (30) jeweils Mittel (32a, 32b) zur Verriegelung des zugehörigen Trägers umfassen, so dass jeder Träger (24a, 24b) lösbar an der Spindel (30) angebracht ist, und dass das Herstellungssystem (10) eine Trägerauswechselvorrichtung (44) umfasst, die den Träger (24b), der eine zurückgezogene Position einnimmt, gegen mindestens einen dritten, zusätzlichen Träger (24c) für eine dritte Karosserieart (12) auswechseln kann.

2. System (10) nach Anspruch 1, **dadurch gekennzeichnet, dass** die Trägerauswechselvorrichtung (44) Folgendes umfasst:
- ein Magazin (46), das unter der Produktionsstation (14) angeordnet ist und einen Trägerauswechselbereich (Z) umfasst, in dem der Träger (24a, 24b, 24c), der eine zurückgezogene Position einnimmt, angeordnet ist,
- einen Wagen (48), der mindestens eine erste freie Stelle (52a) und eine zweite Stelle (52b), an der der dritte Träger (24c) angeordnet ist, umfasst, wobei der Wagen (48) in dem Magazin (46) zwischen einer Entladeposition, in der die erste freie Stelle (52a) des Wagens (48) in dem Auswechselbereich (Z) des Magazins (46) angeordnet ist, so dass der Träger (24b), der eine zurückgezogene Position einnimmt, von der Spindel (30) entriegelt werden kann, um die erste freie Stelle (52a) des Wagens (48) einzunehmen, und einer Ladeposition, in der die zweite Stelle (52b) des Wagens (48) in dem Auswechselbereich (Z) des Magazins (46) angeordnet ist, so dass der dritte Träger (24c) an der Spindel (30) verriegelt werden kann, beweglich ist.

3. System (10) nach Anspruch 2, **dadurch gekennzeichnet, dass** der Wagen (48) mindestens eine dritte Stelle (52c), an der ein vierter, zusätzlicher Träger (24d) für eine vierte Art von Karosserie (12) angeordnet ist, umfasst.

4. System (10) nach einem der vorhergehenden Ansprüche, **dadurch gekennzeichnet, dass** die Produktionsstation (14) einen Boden (22) umfasst, der zwischen einer horizontalen Position, in der ein Bediener (20) eine Produktionsstellung auf dem Boden (22) einnehmen kann, und einer vertikalen Sicherheitsposition, in der der Boden (22) Zugang zur Arbeitsstation (14), insbesondere im Verlauf des Auswechselns der Träger (24a, 24b, 24c, 24d) verhindert, beweglich angebracht ist.

5. System (10) nach einem der vorhergehenden Ansprüche, **dadurch gekennzeichnet, dass** jede der zu produzierenden Karosseriearten mehrere zusammenzufügende Teile umfasst und dass jeder Träger (24a, 24b, 24c, 24d) Mittel zur Befestigung und/oder Positionierung der zusammenzufügenden Teile umfasst.

6. System (10) nach einem der vorhergehenden Ansprüche, **dadurch gekennzeichnet, dass** die Herstellungsmittel (16) mindestens ein Werkzeug (16a) zum manuellen Schweißen zum Zusammenfügen der Teile durch den Bediener (20) umfassen.

7. Verfahren zur Verwendung des Systems (10) zur Produktion mindestens dreier verschiedener Karosseriearten eines Kraftfahrzeugs nach einem der vorhergehenden Ansprüche, wobei die verschiedenen Karosseriearten in einer programmierten Reihenfolge zu der Produktionsstation (14) befördert werden, **dadurch gekennzeichnet, dass** das Verfahren mehrere aufeinanderfolgende Schritte umfasst, darunter:
- einen Schritt der Entladung des Trägers, umfassend:
-- eine Phase des Antriebs des Wagens (48) in seine Entladeposition, in der die erste freie Stelle (52a) des Wagens (48) in dem Auswechselbereich (Z) des Magazins (46) angeordnet ist;
-- eine Phase der Entriegelung des Trägers (24b), der eine zurückgezogene Position einnimmt und der an der Spindel (30) Verriegelt ist, so dass der Träger (24b) von der Spindel (30) entladen wird und von dem Wagen (48) durch die erste freie Stelle (52a) getragen wird;
- einen Schritt des Ladens des gewählten Trägers (24c) in Abhängigkeit von der gemäß der programmierten Reihenfolge nächsten zu produzierenden Karosserieart, wobei der Ladeschritt Folgendes umfasst:
-- eine Phase des Antriebs des Wagens (48) in seine Ladeposition, in der die zweite (52b) oder die dritte (52c) Stelle des Wagens (48) in dem Auswechselbereich (Z) des Magazins (46) angeordnet ist;
-- eine Phase des Verriegelns des gewählten Trägers (24c) an der Spindel (30), um den Träger (24c) auf die Spindel (30) zu laden;
- einen Schritt des Umschaltens der beiden Träger (24a, 24b), die von der Spindel (30) getragen werden.

8. Verfahren nach Anspruch 7, **dadurch gekennzeichnet, dass** der Umschaltschritt Folgendes umfasst:
-- eine Vorantriebsphase des Bodens (20) aus seiner horizontalen Position in seine vertikale Sicherheitsposition;
-- eine Phase des Antriebs zum Schwenken der Spindel (30) der Umschaltvorrichtung um eine halbe Umdrehung, um den gewählten Träger (24c) aus seiner zurückgezogenen Position in seine Herstellungsposition anzutreiben;
-- eine Phase des Antriebs des Bodens (22) aus seiner vertikalen Sicherheitsposition in seine horizontale Position.

9. Verfahren nach einem der Ansprüche 7 und 8, **dadurch gekennzeichnet, dass** der Ladeschritt und der Entladeschritt parallel während der Herstellung der Karosseriearten durchgeführt werden können.
